# EUROPEAN PATENT APPLICATION

(11) **EP 3 187 370 A2**
(43) Date of publication of application: **05.07.2017**
(21) Application number: 16206984.3
(22) Date of filing: 27.12.2016
(51) Int. Cl.: B60Q 1/34, B60Q 1/00, B60Q 1/40, B62D 1/04

(54) **STEERING WHEEL TURN SIGNAL**

(30) Priority: 31.12.2015 US 201562273927 P; 08.02.2016 US 201662292599 P
(71) Applicant: Rynerson, James, M., Alvaton, KY 42122 (US)
(72) Inventor: Rynerson, James, M., Alvaton, KY 42122 (US)
(74) Representative: Pontet Allano & Associes

(57) **Abstract**

An improved steering wheel (12) mounted turn signal switch (10) is disclosed. According to an embodiment, the turn signal switch (10) may be mounted on steering wheel (12) so that it may be activated by a driver without the driver removing their hands from the steering wheel (12). In an embodiment, the turn signal switch (10) is mounted around a circumference of the steering wheel (12) with a left half of the circumferential switch (10) being capable of activating left turn signals and a right half of the circumferential switch (10) being capable of activating right turn signals. In an embodiment, a pair of semi-circumferential switches is mounted to the steering wheel with the left switch being capable of activating the left turn signals and the right switch being capable of activating the right turn signals.

## Description

### CROSS-REFERENCE TO RELATED APPLICATIONS

This application claims priority to United States Provisional Application No. 62/273,927 filed on December 31, 2015, and United States Provisional Application No. 62/292,599 filed on February 8, 2016, each of which is incorporated herein by reference in its entirety.

### FIELD

The disclosed invention relates to turn signals for moving vehicles, and more particularly, to a turn signal switch mounted on a steering wheel.

### BACKGROUND

Driving on the highway in traffic often requires multiple high speed lane changes. To change lanes safely, the operator of the vehicle must signal to other drivers his or her intent to change lanes by using the turn signals on the vehicle. Turn signals are conventionally controlled by a lever that projects from the steering wheel column. To operate a conventional turn signal control lever, a driver typically must completely or partially remove one hand from the steering wheel in order to manipulate the lever. Once engaged, the lever will typically remain in an on position until the driver turns the steering wheel a sufficient degree to result in the lever automatically disengaging. If the steering wheel is not turned a sufficient degree, the driver must again remove one hand from the steering wheel to manually disengage the lever. Often times, when merely changing lanes, the steering wheel is not moved to a sufficient degree to automatically disengage the lever, thereby requiring the driver to manually disengage the lever or the signal will continue to blink.

What is needed is a turn signal switch that can be operated without the need for the driver of a vehicle to remove his or her hands from the steering wheel.

### SUMMARY

The disclosed invention provides an improved steering wheel mounted turn signal switch. In particular, the turn signal switch is mounted on a steering wheel so that it may be activated by the driver without the driver removing his or her hands from the steering wheel. In an embodiment, the turn signal switch is mounted around the circumference of the steering wheel with the left half of the circumferential switch being capable of activating the left turn signals and the right half of the circumferential switch being capable of activating the right turn signals. In an embodiment, a pair of semi-circumferential switches is mounted to the steering wheel with the left switch being capable of activating the left turn signals and the right switch being capable of activating the right turn signals.

In an embodiment, the circumferential switch or pair of semi-circumferential switches is mounted on the inner portion of the steering wheel so as to be easily accessible with the thumbs of the driver during use. In particular, the circumferential switch or pair of semi-circumferential switches may be activated by the driver regardless of where along the steering wheel the driver has his or her hands. For example, drivers may easily activate the circumferential switch or pair of semi-circumferential switches with their hands in the standard 10 and 2 positions with their thumbs and without ever having to remove their hands from the steering wheel or their eyes from the road.

In embodiments of the invention, the circumferential switch or pair of semi-circumferential switches operates in addition to a conventional turn signal lever, such as the standard turn signal lever typically mounted to the steering column. In these latter embodiments, the circumferential switch or semi-circumferential switches may be wired in parallel with the conventional turn signal lever.

### BRIEF DESCRIPTION OF THE DRAWINGS

The accompanying drawings, which are incorporated in and constitute a part of this specification, illustrate embodiments of the invention and, together with the general description of the invention given above and the detailed description of the embodiments given below, serve to explain the principles of the disclosed invention.
FIG. 1 is a perspective view of a circumferential turn signal switch mounted on a vehicle steering wheel, according to an embodiment.
FIG. 2 is an elevational view of an embodiment of a circumferential turn signal switch mounted on a vehicle steering wheel, according to an embodiment.
FIG. 3 is an elevational view of an embodiment of a semi-circumferential turn signal switch mounted on a vehicle steering wheel, according to an embodiment.
FIG. 4 is a schematic diagram of a turn signal control system, according to an embodiment.
FIG. 5 is a cross sectional view of the steering wheel of FIG. 2 illustrating the positioning of a circumferential turn signal switch on the inner quadrant of the steering wheel, according to an embodiment.

### DETAILED DESCRIPTION

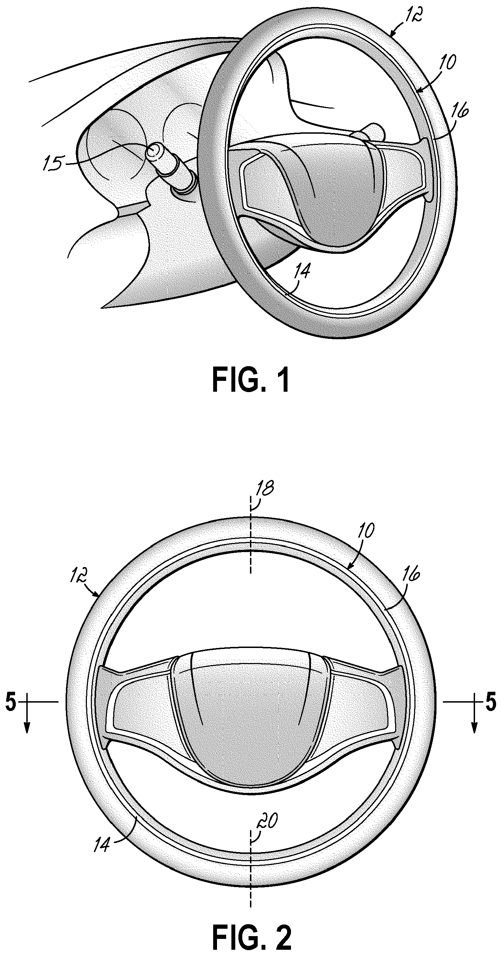

FIG. 1 is a perspective view of a circumferential turn signal switch 10 mounted on a vehicle steering wheel 12, according to an embodiment. FIG. 2 is an elevational view of the vehicle steering wheel 12. Embodiments of the invention may include a conventional turn signal lever 15 mounted to the steering wheel column. Referring to FIGS. 1 and 2, the circumferential switch 10 may include a contact surface around the circumference of the steering wheel 12. In an embodiment, the contact surface of the circumferential switch 10 includes a left half 14 and a right half 16. As shown on FIG. 2, the left half 14 of the circumferential switch 10 is differentiated from the right half 16 with broken lines indicating the top center 18 and bottom center 20 positions on the steering wheel 12.

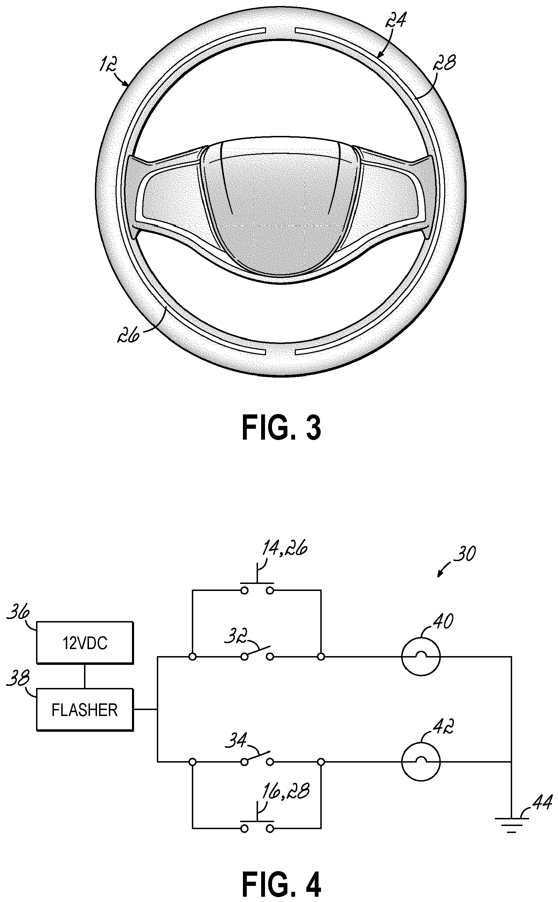

FIG. 3 is an elevational view of a second embodiment of a turn signal switch utilizing a pair of semi-circumferential switches 26, 28 wherein the left semi-circumferential switch 26 is distinct from the right semi-circumferential switch 28. The circumferential switch 10 and the pair of left and right semi-circumferential switches 26, 28 have a contact surface that a vehicle operator contacts to engage the turn signals as well as the associated a circuitry for operating the turn signals.

FIG. 4 is a schematic diagram of an exemplary turn signal system 30 for use with embodiments of the invention. The left half 14 of the circumferential switch 10 or the left semi-circumferential switch 26 is wired in parallel with a left lever activated turn signal switch 32, and the and right half 16 of the circumferential switch 10 or right semi-circumferential switch 28 is wired in parallel with a lever activated right turn signal switch 34. The lever activated turn signal switches 32, 34 and the circumferential switch 10 or the left and right semi-circumferential switches 26, 28 are wired in series with a power source or battery 36, and conventional flasher circuitry 38. The circuit is connected conventionally to a ground 44.

The circuit may further include a timer circuit that disengages the circumferential switch 10 or the left and right semi-circumferential switches 26, 28 after a predetermined duration. For example, the timer circuit may disengage the circumferential switch 10 or the left and right semi-circumferential switches 26, 28 after a duration in a range from about 2 seconds to about 8 seconds or, alternatively, in a range from about 2 seconds to about 4 seconds. In an embodiment, a timer circuit may be customized to disengage the circumferential switch 10 or the left and right semi-circumferential switches 26, 28 after a user-selected duration. It will be appreciated that the timer circuit may also disengage the left and right lever activated turn signal switches 32, 34.

The left half 14 of the circumferential switch 10 or the left semi-circumferential switch 26 is configured to energize the left turn signal lights 40 of the vehicle (not shown) when the left half 14 of the circumferential switch 10 or the left semi-circumferential switch 26 is activated, such as by depressing or contacting the contacting surface. The left turn signal lights 40 may be de-energized when the left half 14 of the circumferential switch 10 or the left semi-circumferential switch 26 is released. In an alternative embodiment, the respective switches 14 or 26 may be automatically disengaged by a timing circuit after a predetermined duration.

The right half 16 of the circumferential switch 10 or the right semi-circumferential switch 28 is configured to energize the right turn signal lights 42 of the vehicle (not shown) when the right half 16 of the circumferential switch 10 or the right semi-circumferential switch 28 is activated, such as by depressing or contacting the contacting surface. The right turn signal lights 42 may be de-energized when the right half 16 of the circumferential switch 10 or the right semi-circumferential switch 28 is released. In an alternative embodiment, the switches 16 or 28 may be automatically disengaged by a timing circuit after a predetermined duration. In an embodiment, the predetermined duration is in a range from about 2 seconds to about 8 seconds, or, alternatively, in a range from about 2 seconds to about 4 seconds.

In an alternative embodiment, the left and right turn signal lights 40, 42 may be selectively activated by the user contacting the circumferential switch 10 at any position around the circumference of the steering wheel 12 by tapping the contact surface of the circumferential switch 10 or the left and right semi-circumferential switches 26, 28 with a predetermined pattern. For example, in an embodiment the user may activate the right turn signal light by tapping the contact surface of the switch 10, 26, 28 a predetermined number of times, such as two or three times, followed by sliding the finger or thumb across the contact surface in a clockwise direction for a predetermined distance. The left turn signal light may similarly be activated by tapping the contact surface a predetermined number of times, such as two or three, and sliding the finger or thumb across the contact surface in counter-clockwise direction for a predetermined distance. In an embodiment, the predetermined distance is about 1 cm to about 5 cm, or about 1 cm to about 3 cm. It will be appreciated that other predetermined patterns may be used. It will also be appreciated that the left and right turn signal lights may be deactivated with a predetermined signal or after a predetermined duration. The predetermined pattern for activating the turn signal lights may be the same as or different from the predetermined pattern for deactivating the turn signal lights.

The circumferential switch 10 and the left and right semi-circumferential switches 26, 28 may be made from conventional materials as are known in the art. In an embodiment, the circumferential switch 10 and the left and right semi-circumferential switches 26, 28 are pressure sensitive. In an alternative embodiment, the circumferential switch 10 and the left and right semi-circumferential switches 26, 28 are sensitive to touch and may include a capacitive sensor.

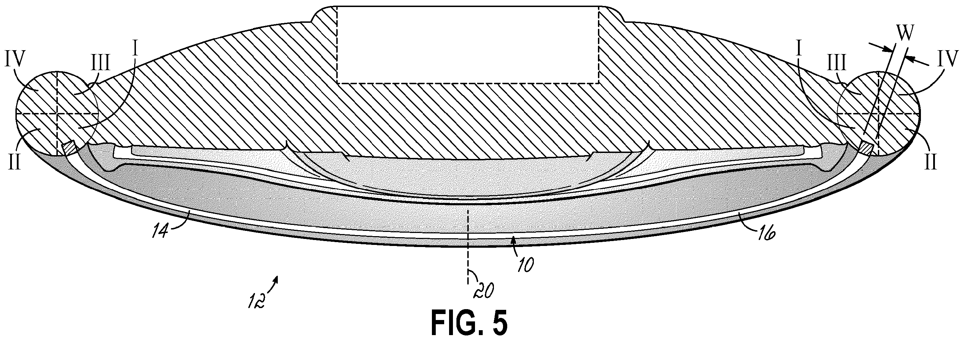

In an embodiment, the circumferential switch 10 and the left and right semi-circumferential switches 26, 28 are located on at least the inner quadrant I (FIG. 5) of the steering wheel 12 so as to be easily accessible by the operator of the vehicle and in particular, to be easily accessible by the thumbs on each hand of the operator. In alternative embodiments, the circumferential switch 10 and the left and right semi-circumferential switches 26, 28 are located on at least one of the other quadrants II, III, IV, of the steering wheel 12. Embodiments of the circumferential switch 10 and the left and right circumferential switches 26, 28 have a width (W) of less than about 20 mm and alternatively, in a range from about 5 mm to about 20 mm, or in a range from about 10 mm to about 20 mm, or in a range from about 10 mm to about 15 mm.

During use of an embodiment, the vehicle operator is able to quickly and safely activate the left or right turn signals by depressing or contacting the left half 14 or right half 16 of the circumferential switch 10, respectively, or the left and right semi-circumferential switches 26, 28 of a vehicle to activate the corresponding turn signal light 40, 42. The activated turn signal light 40, 42 may be deactivated by releasing the respective switch, after a predetermined duration as previously described.

During use of an alternative embodiment, the vehicle operator taps the contact surface of the circumferential switch 10 of the semi-circumferential switches 26, 28 in a predetermined pattern to activate the desired left or right turn signal lights for a predetermined duration after tapping out a predetermined deactivating pattern. In an embodiment, the predetermined duration of turn signal activation is in a range from about 2 seconds to about 8 seconds and, alternatively, in a range from about 2 seconds to about 4 seconds.

The positioning of the circumferential switch 10 and the left and right semi-circumferential switches 26, 28 allows for the vehicle operator to more safely and easily use the turn signals at high speeds while making rapid lane changes.

While the disclosed invention has been illustrated by the description of embodiments thereof, and while the embodiments have been described in considerable detail, it is not intended to restrict or in any way limit the scope of the appended claims to such detail. Additional advantages and modifications will readily appear to those skilled in the art. The invention in its broader aspects is, therefore, not limited to the specific details, representative apparatus and method, and illustrative examples shown and described. Accordingly, departures may be made from such details without departing from the spirit or scope of the general inventive concept.

## Claims

1. A circumferential turn signal switch (10;26,28), comprising a contact portion (14,16;26,28) for activating a left turn signal light (40) and a right turn signal light (42), wherein the contact portion (14,16;26,28) is located around a circumference of a steering wheel (12).

2. The switch (10;26,28) of claim 1, wherein the contact portion (14,16;26,28) is located on an inner quadrant of the steering wheel (12).

3. The switch (10;26,28) of claims 1 or 2, wherein the contact portion has a left contact portion (14;26) for activating the left turn signal light (40) and a right contact portion (16;28) for activating the right turn signal light (42).

4. The switch (10) of claim 3, wherein the left contact portion (14) is continuous with the right contact portion (16).

5. The switch (26,28) of claim 3, wherein the left contact portion (26) is distinct from the right contact portion (28).

6. The switch (10;26,28) of one of claims 1 to 5, further comprising a circuit for activating the turn signal lights (40,42).

7. The switch (10;26,28) of claim 6, further comprising a timer for deactivating the turn signal lights (40,42) after a predetermined duration.

8. The switch (10;26,28) of claim 7, wherein the predetermined duration ranges from about 2 seconds to about 8 seconds.

9. The switch (10;26,28) of claim 6, wherein the circuit includes a parallel circuit activated by a conventional turn signal lever.

10. A steering wheel (12) equipped with a circumferential turn signal switch (10;26,28) according to anyone of the preceding claims.

11. A method of activating a turn signal light (40,42) on a vehicle comprising contacting the contact portion (14,16;26,28) of a switch (10;26,28) located around a circumference of a steering wheel (12).

12. The method of claim 11 further comprising contacting the contact portion (14,16;26,28) of the switch (10;26,28) with a first predetermined pattern to activate a left turn signal light (40) and a second predetermined pattern to activate a right turn signal light (42).

13. The method of claim 12 further comprising contacting the contact portion of the switch (10;26,28) with a third predetermined pattern to deactivate the left or right turn signal light (40,42).

14. The method of claim 13 wherein the third predetermined pattern is different from the first and second predetermined patterns.
